# EUROPÄISCHE PATENTANMELDUNG

(11) **EP 4 764 641 A1**
(43) Veröffentlichungstag der Anmeldung: **24.06.2026**
(21) Anmeldenummer: 25221746.8
(22) Anmeldetag: 09.12.2025
(51) Int. Cl.: G02B 6/44, G02B 6/50, H02G 9/10

(54) **SCHACHTSYSTEM MIT EINEM KLEINEN SCHACHT**

(30) Priorität: 18.12.2024 DE 102024138535
(71) Anmelder: Langmatz GmbH, 82467 Garmisch-Partenkirchen (DE)
(72) Erfinder: Jais, Stefan, 82481 Mittenwald (DE)
(74) Vertreter: Flosdorff, Jürgen

(57) **Zusammenfassung**

Das Schachtsystem mit einem kleinen Schacht, in den beispielsweise Glasfaser und/oder Erdkabel einführbar sind, die in dem Schacht mit abgehenden Glasfasern und/oder Erdkabeln verbindbar sind, mit einer Schachtabdeckung, die die Oberseite des Schachtes verschließt
**ist dadurch gekennzeichnet,**
dass in die Schachtabdeckung ein kreisrunder Deckel eingesetzt ist, der die Zugangsöffnung zum Inneren des Schachtes abdeckt, und dass der Deckel zwischen einem Verriegelungsbereich, in dem der Deckel gegen Entnahme verriegelt ist, und einer Entriegelungsstelle drehbar ist, in der der Deckel aus der Schachtabdeckung entnehmbar ist.

## Beschreibung

Die Erfindung betrifft ein Schachtsystem mit einem kleinen Schacht, in den beispielsweise Glasfaser und/oder
Erdkabel einführbar sind, die in dem Schacht mit abgehenden Glasfasern und/oder Erdkabeln verbindbar sind, und mit einer Schachtabdeckung, die die Oberseite des Schachtes verschließt.

Ein derartiger kleiner Schacht ist in der DE 10 2023 100 475 A1 offenbart. Bei diesem Schacht bestehen die Schachtwände aus Kunststoff und sind mit Rippen versehen, wodurch die Schachtwände eine hohe Stabilität aufweisen. Der kleine Schacht ist beispielsweise dazu vorgesehen, ankommenden Glasfaser und/oder Erdkabel in dem Schacht mit abgehenden Glasfasern und/oder Erdkabel zu verbinden, wobei die Montagearbeiten bei abgenommenem Schachtdeckel von oben durchgeführt werden, ohne dass ein Monteur in den Schacht einsteigt, um die Montagearbeiten in dem Innenraum des Schachtes auszuführen. Bei diesem bekannten Schacht ist der Schachtdeckel mit mehreren Schrauben mit dem Schacht verbunden, die zum Abnehmen des Schachtdeckels jedes Mal gelöst und danach wieder auf dem Schachtdeckel festgezogen werden müssen. Dies ist ein aufwendiger und umständlicher Vorgang, der den Zeitaufwand für die Montagearbeit jeweils deutlich verlängert.

Der vorliegenden Erfindung liegt die Aufgabe zugrunde, ein Schachtsystem mit einem Schacht der betrachteten Art anzugeben, bei dem der Zugang zum Inneren des Schachtes schneller und einfacher ermöglicht ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass in die Schachtabdeckung, die vorzugsweise auf dem Schacht mit Schrauben befestigt ist oder einstückig mit den Schachtwänden ausgebildet sein kann, ein kreisrunder Deckel eingesetzt ist, der die Zugangsöffnung zum Inneren des Schachtes abdeckt, und dass der Deckel zwischen einem Verriegelungsbereich, in dem der Deckel gegen Entnahme verriegelt ist, und einer Entriegelungsstelle drehbar ist, in der der Deckel aus der Schachtabdeckung entnehmbar ist. Bei dieser Ausbildung muss zum Öffnen des Zugangs zum Schachtinneren lediglich der kreisrunde Deckel aus der Verriegelungsstellung in die Entriegelungsposition gedreht werden, in der der Deckel aus der Schachtabdeckung entnommen bzw. ausgehoben oder ausgehebelt werden kann. Zum Drehen des Deckels zwischen einer Verriegelungsstelle und der Entriegelungsposition kann der Deckel mit einem mittigen Betätigungszapfen versehen sein, der eine unrunde, beispielsweise sechseckige Kontur haben kann, an der zum Drehen des Deckels ein entsprechender Hebel ansetzbar ist. Alternativ hierzu kann der Deckel beispielsweise mit zwei einander gegenüberliegenden Einbuchtungen in seiner Oberseite versehen sein, mit denen der Deckel von Hand, ohne jegliches Werkzeug drehbar ist.

In jedem Fall ist der kreisrunde Deckel schnell und mit einfachen Handgriffen abzunehmen und nach durchgeführter Montagearbeit wieder einzusetzen, wodurch der Arbeitsaufwand signifikant verringert ist.

Mit großem Vorteil wird vorgeschlagen, dass der Deckel an seiner Unterseite mit einem radial nach außen überstehenden Verriegelungshaken versehen ist, der von der Unterseite des Deckels zudem schräg nach unten verläuft, und dass der Deckel auf einem ringförmigen inneren Vorsprung der Schachtabdeckung aufliegt, wobei der Verriegelungshaken den ringförmigen inneren Vorsprung der Schachtabdeckung mit dem Verriegelungshaken in dem Verriegelungsbereich untergreift. Bei dieser Ausbildung ist der Deckel so lange unlösbar in der Schachtabdeckung fixiert, wie sich der Verriegelungshaken im Verriegelungsbereich befindet. In weiterer Ausgestaltung der Erfindung wird zudem vorgeschlagen, dass der ringförmige innere Vorsprung der Schachtabdeckung an der Entriegelungsstelle eine Ausbuchtung aufweist, in der der Verriegelungshaken den ringförmigen inneren Vorsprung der Schachtabdeckung nicht mehr untergreift und damit der Weg zur Entnahme des Deckels für den Verriegelungshaken frei ist.

Außerdem wird vorgeschlagen, dass der Deckel an der Entriegelungsstelle eine seitliche Einbuchtung und die Schachtabdeckung am benachbarten Rand eine Aussparung aufweist, in die beispielsweise ein stiftförmiges Werkzeug einsetzbar ist, um den Deckel aus der Schachtabdeckung auszuhebeln. Dies kann ein Monteur aber auch mit seinen Fingern bewerkstelligen.

Die Entnahme des Deckels aus der Schachtabdeckung wird zudem dadurch erleichtert, dass vorgesehen sein kann, dass die seitliche Einbuchtung am Deckel und die Aussparung am benachbarten Rand der Schachtabdeckung auch an der gegenüberliegenden, um etwa 180° versetzten Stelle vorgesehen sein können.

Mit Vorteil kann zudem vorgesehen sein, dass in dem Verriegelungsbereich des Deckels ein Anschlag an dem ringförmigen inneren Vorsprung der Schachtabdeckung ausgebildet ist, an dem der Verriegelungshaken leicht lösbar einrastet. Auch an der Entriegelungsstelle sollte ein Anschlag für den Verriegelungshaken ausgebildet sein.

Außerdem kann in einer Ausführungsform der Erfindung vorgesehen sein, dass die Schachtabdeckung einen innen hohlen, an der Unterseite offenen Aufsatz auf ihrer Oberseite aufweist, in den der Deckel eingesetzt ist und der die Zugangsöffnung zum Inneren des Schachtes enthält. Dieser Aufsatz kann einstückig mit der Schachtabdeckung im Kunststoff-Spritzguss-verfahren ausgebildet sein und eine kubische oder zum Beispiel kreiszylindrische Form haben. Da der Schacht in das Erdreich eingesetzt ist und die mit dem Schacht verschraubte Schachtabdeckung bündig mit der umgebenen Oberfläche verläuft, befindet sich bei einer Ausbildung des Aufsatzes auf der übrigen Schachtabdeckung der Deckel beispielsweise 10 oder 20 cm über der Oberfläche des Erdreichs, sodass der Schacht besser vor eindringendem Wasser oder Schmutzpartikel im Bereich des Schachtdeckels geschützt ist.

In einer alternativen Ausführungsform der Erfindung hat die Schachtabdeckung eine durchgehend flache Form mit einer plattenförmigen Oberseite, in die der Deckel eingesetzt ist und die Zugangsöffnung zum Schachtinneren enthält. Dabei kann die Schachtabdeckung einstückig mit den Schachtwänden ausgebildet oder aber angeschraubt sein.

Weitere Einzelheiten der Erfindung ergeben sich aus der folgenden Beschreibung zweier Ausführungsformen sowie anhand der Zeichnungen.

Dabei zeigen:
- Figur 1: eine erste Ausführungsform des erfindungsgemäßen Schachtes in einer Explosionsdarstellung;
- Figur 2: den zusammengesetzten Schacht der Figur 1;
- Figur 3: die Schachtabdeckung des Schachtes;
- Figur 4: eine Aufsicht auf den Schachtdeckel im vergrößerten Maßstab;
- Figur 5: die Unterseite des Schachtdeckels der Figur 4;
- Figur 6: den Bereich des Verriegelungshakens des Schachtdeckels in der Freigabestellung;
- Figur 7: die lösbare Verriegelung des Verriegelungshakens in der verriegelten Position;
- Figur 8: die Aussparung der Schachtabdeckung am Rand des Deckels.
- Figur 9: eine Explosionsdarstellung einer zweiten Ausführungsform.

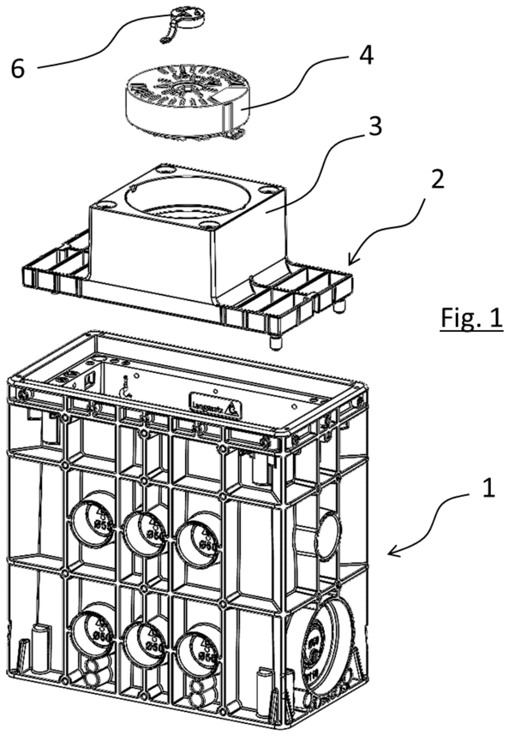

Figur 1 zeigt die Bestandteile einer ersten Ausführungsform des erfindungsgemäßen kleinen Schachtes in einer Explosionsdarstellung seiner Bestandteile. Der kleine Schacht 1, der beispielsweise die Maße B 410 x T 220 x H 400 mm haben kann, besteht aus einem Kunststoff wie geschäumtem Polycarbonat und ist bevorzugt einstückig im Kunststoff-Spritzgussverfahren hergestellt. Die Schachtwände sind mit Rippen versehen, wodurch der Schacht eine hohe Stabilität erhält.

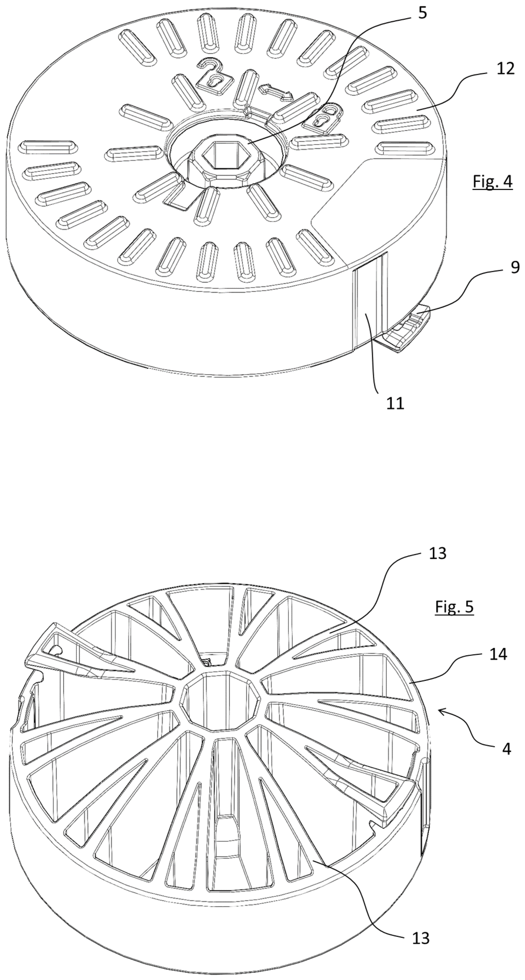

Die Schachtabdeckung 2 besteht aus einer mit Rippen verstärkten Grundplatte und einem einstückig damit verbundenen kubischen Aufsatz 3, der die Zugangsöffnung zum Inneren des Schachtes 1 bildet. Der hohle Aufsatz ist an seiner Oberseite durch einen kreisrunden Deckel 4 verschlossen, der auf die weiter unten beschriebene Weise entnehmbar ist, wenn Arbeiten in dem Schacht 1 durchzuführen sind. Im Zentrum des Deckels 4 ist ein freistehender Zapfen 5 ausgebildet (Figur 4), mit dem der Deckel zwischen einer Verriegelungsposition und einer Entriegelungsposition drehbar ist. Der Zapfen 5 ist durch eine abnehmbare Kappe 6 überdeckt.

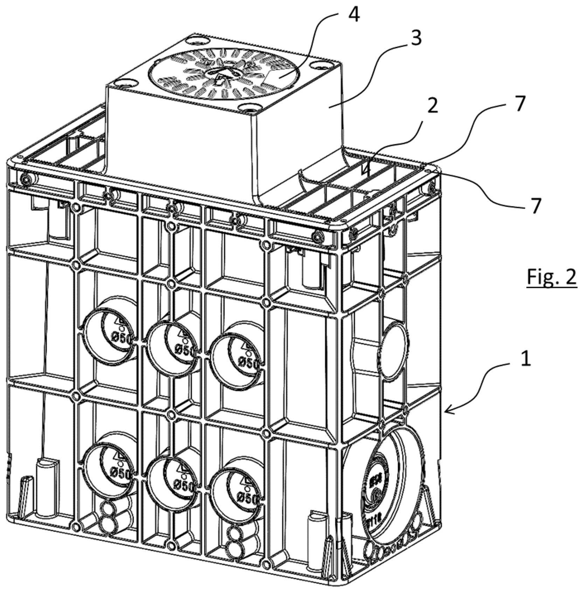

Figur 2 zeigt den fertig zusammengesetzten Schacht mit der Schachtabdeckung 2 und dem in dem Aufsatz 3 eingesetzten Deckel 4. Die Schachtabdeckung 2 ist an den Ecken des Schachtes mit jeweils zwei Schrauben 7 angeschraubt.

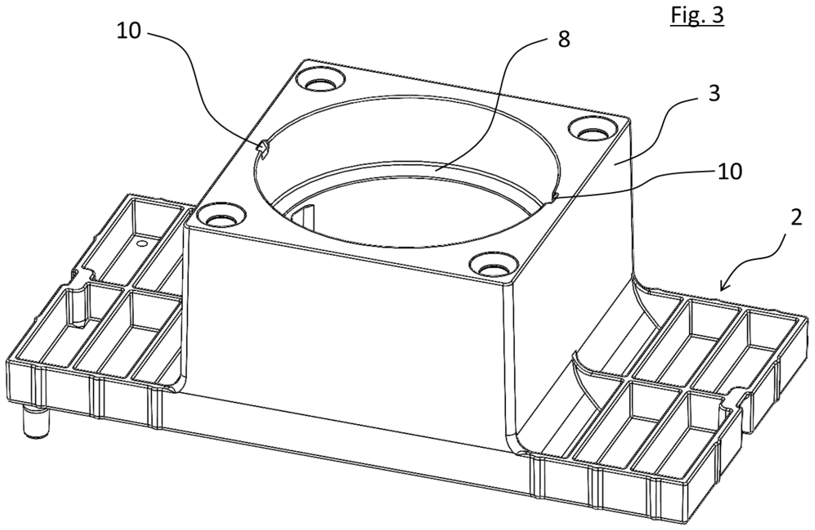

Figur 3 zeigt in einer perspektivischen Aufsicht auf die Schachtabdeckung 2, dass am Rand der Aufnahmeöffnung des Aufsatzes 3 für den Deckel 4 ein ringförmiger innerer Vorsprung 8 ausgebildet ist, auf dem der Deckel 4 aufliegt und der dabei von einem radial nach außen überstehenden Verriegelungshaken 9 untergriffen wird, und zwar in dem Verriegelungsbereich des Deckels, in dem dieser nicht aus der Schachtabdeckung entfernbar ist.

Figur 3 zeigt außerdem, dass an zwei diametral gegenüberliegenden Stellen am Rand der Öffnung des Aufsatzes 3 Aussparungen 10 ausgebildet sind, die es ermöglichen, den Deckel in der in seine Entnahmeposition gedrehten Stellung auszuhebeln.

Figur 4 zeigt als zugehöriges Merkmal an dem Deckel 4 eine Einbuchtung 11 am Rand des Deckels 4, an der der Deckel 4 mittels eines beispielsweise stiftförmigen Werkzeugs ausgehebelt werden kann, wenn die Einbuchtung 11 der Aussparung 10 gegenüberliegt, wie das in der Freigabeposition des Deckels 4 der Fall ist.

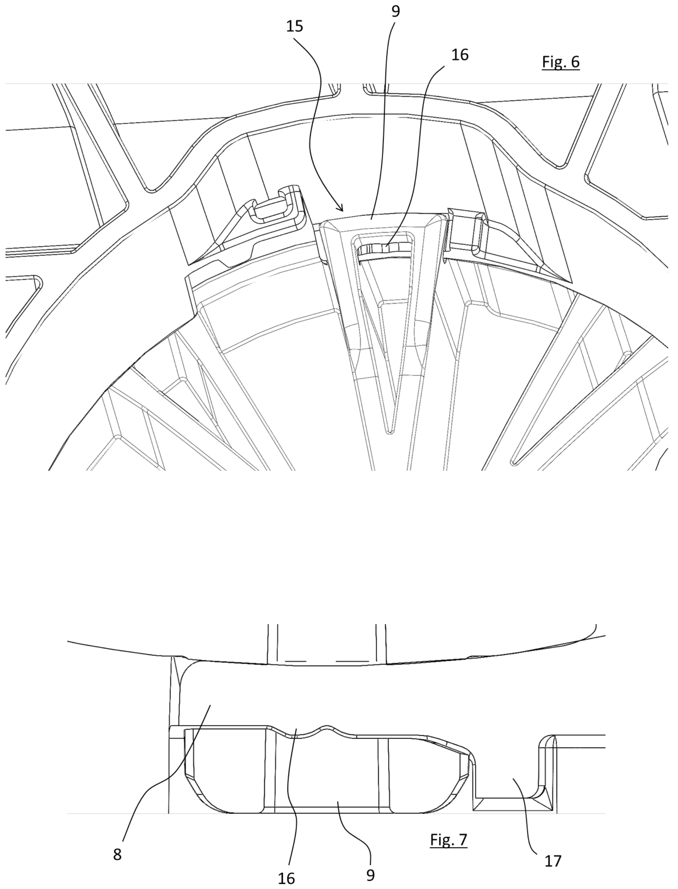

Figur 5 zeigt eine Unteransicht des Deckels 4, der unter der geschlossenen Oberseite 12 aus einer Vielzahl von radialen Rippen 13 besteht. Der Verriegelungshaken 9 ragt nicht nur radial über den Umfang des Deckels 4 hinaus, sondern ist auch schräg nach oben gerichtet, sodass der Deckel 4 im eingesetzten Zustand mit seinem Rand 14 auf dem inneren Ringvorsprung 8 aufliegt und dabei mit dem überstehenden Verriegelungshaken 9 diesen Vorsprung untergreift, solange sich der Deckel 4 im Verriegelungsbereich befindet. In dem Verriegelungsbereich ist eine Verriegelungsstellung 15 ausgebildet (Figur 6), an der der Verriegelungshaken 9 lösbar in eine Wellenkontur 16 des ringförmigen Vorsprungs 8 einrastet, damit der Deckel 4 nicht unbeabsichtigt in die Freigabeposition gedreht werden kann. Die lösbare Verrastung des Verriegelungshakens 9 an dem Wellenbereich 16 des ringförmigen Vorsprungs 8 ist im vergrößerten Maßstab in Figur 7 gezeigt, wobei in dieser Position der Verriegelungshaken 9 an einem Anschlag 17 anliegt.

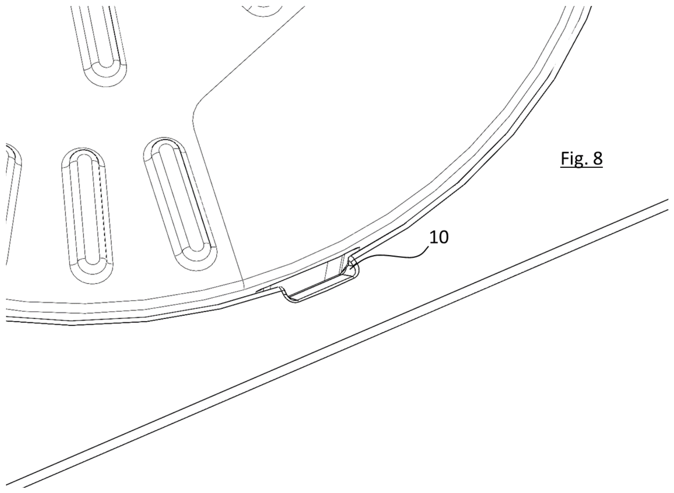

In der Entriegelungsposition des Deckels 4 ist in der Aufnahmeöffnung für den Deckel 4 eine Einbuchtung vorgesehen, an der der Verriegelungshaken 9 nicht von dem inneren Ringvorsprung 8 überdeckt ist. In dieser Drehposition des Deckels 4 ist ebenfalls ein Anschlag für den Verriegelungshaken 9 ausgebildet. An dieser Position kann der Deckel 4 durch Eingriff in die Aussparungen 10 (Figur 8) aus dem Aufsatz 3 bzw. der Schachtabdeckung herausgehebelt werden, sodass der Zugang zum Inneren des Schachtes 1 frei ist.

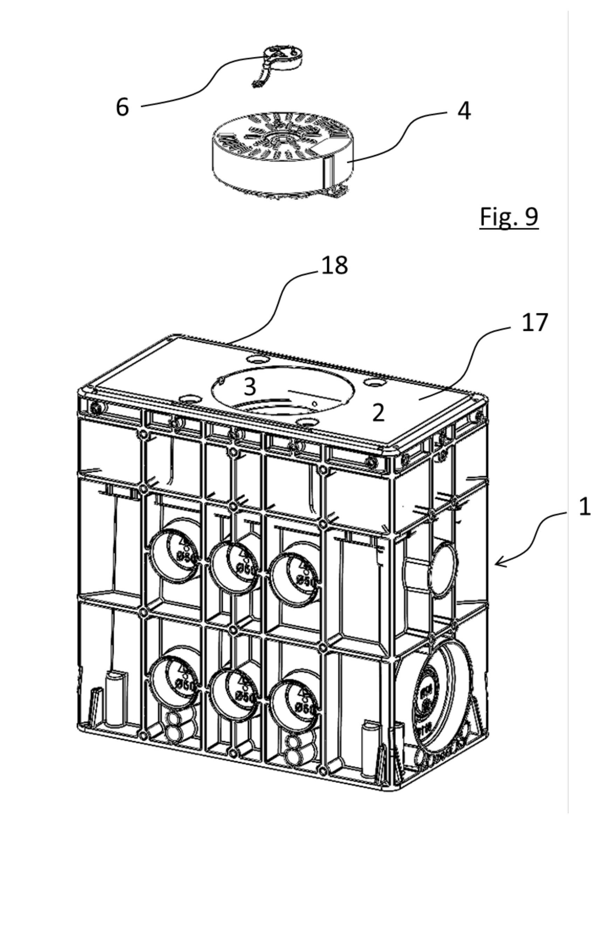

Figur 9 zeigt eine alternative Ausführungsform, bei der die Schachtabdeckung 17 eine durchgehend flache Form hat mit einer plattenförmigen Oberseite 18, in die der Deckel 4 eingesetzt und auf dieselbe Weise verriegelt und entnehmbar ist wie bei der ersten Ausführungsform. Die Schachtabdeckung 17 kann einstückig mit den Schachtwänden im Spritzgussverfahren ausgebildet sein.

## Patentansprüche

1. Schachtsystem mit einem kleinen Schacht (1), in den beispielsweise Glasfaser und/oder Erdkabel einführbar sind, die in dem Schacht (1) mit abgehenden Glasfasern und/oder Erdkabeln verbindbar sind, mit einer Schachtabdeckung (2, 3; 17), die die Oberseite des Schachtes (1) verschließt.
**dadurch gekennzeichnet,**
**dass** in die Schachtabdeckung (2, 3; 17) ein kreisrunder Deckel (4) eingesetzt ist, der die Zugangsöffnung zum Inneren des Schachtes (1) abdeckt, und dass der Deckel (4) zwischen einem Verriegelungsbereich, in dem der Deckel (4) gegen Entnahme verriegelt ist, und einer Entriegelungsstelle drehbar ist, in der der Deckel (4) aus der Schachtabdeckung (2, 3; 17) entnehmbar ist.

2. Schachtsystem nach Anspruch 1,
**dadurch gekennzeichnet,**
**dass** der Deckel (4) mit einem mittigen Betätigungszapfen (5) versehen ist, mit dem der Deckel (4) drehbar ist.

3. Schachtsystem nach Anspruch 1 oder 2,
**dadurch gekennzeichnet,**
**dass** der Deckel (4) an seiner Unterseite mit einem nach unten und radial nach außen überstehenden Verriegelungshaken (9) versehen ist, der einen ringförmigen inneren Vorsprung (8) der Schachtabdeckung (2, 3; 17), auf dem der Deckel (4) aufliegt, in dem Verriegelungsbereich untergreift.

4. Schachtsystem nach Anspruch 3,
**dadurch gekennzeichnet,**
**dass** der ringförmige innere Vorsprung (8) der Schachtabdeckung (2, 3; 17) an der Entriegelungsstelle eine Ausbuchtung aufweist, die den Verriegelungshaken (9) zur Entnahme des Deckels (4) freigibt.

5. Schachtsystem nach einem der Ansprüche 1 bis 4,
**dadurch gekennzeichnet,**
**dass** in dem Verriegelungsbereich ein Anschlag (17) an dem ringförmigen inneren Vorsprung (8) ausgebildet ist, an dem der Verriegelungshaken (9) lösbar einrastet.

6. Schachtsystem nach einem der Ansprüche 1 bis 5,
**dadurch gekennzeichnet,**
**dass** an der Entriegelungsstelle ein Anschlag für den Verriegelungshaken (9) ausgebildet ist.

7. Schachtsystem nach einem der Ansprüche 1 bis 6,
**dadurch gekennzeichnet,**
**dass** der Deckel (4) an der Entriegelungsstelle eine seitliche Einbuchtung und die Schachtabdeckung (2, 3; 17) am benachbarten Rand eine Aussparung (10) aufweist, durch die das Aushebeln des Deckels (4) ermöglicht ist.

8. Schachtsystem nach einem der Ansprüche 1 bis 7,
**dadurch gekennzeichnet,**
**dass** die Schachtabdeckung (2, 3) einen innen hohlen, an der Unterseite offenen Aufsatz (3) auf ihrer Oberseite aufweist, in den der Deckel (4) eingesetzt ist und der die Zugangsöffnung zum Inneren des Schachtes (1) enthält.

9. Schachtsystem nach Anspruch 8,
**dadurch gekennzeichnet,**
**dass** der Aufsatz (3) einstückig mit der Schachtabdeckung (2, 3) ausgebildet ist.

10. Schachtsystem nach Anspruch 7 oder 8,
**dadurch gekennzeichnet,**
**dass** der Aufsatz (3) eine kubische oder kreiszylindrische Form hat.

11. Schachtsystem nach einem der Ansprüche 1 bis 7,
**dadurch gekennzeichnet,**
**dass** die Schachtabdeckung (17) eine flache Form hat mit einer durchgehend plattenförmigen Oberseite (18), in die der Deckel (4) eingesetzt ist und die die Zugangsöffnung zum Inneren des Schachtes enthält.

12. Schachtsystem nach Anspruch 11,
**dadurch gekennzeichnet,**
**dass** die Schachtabdeckung (17) einstückig an dem Schacht angeformt ist.

13. Schachtsystem nach einem der Ansprüche 1 bis 11,
**dadurch gekennzeichnet,**
**dass** die Schachtabdeckung (17) an dem Schacht angeschraubt ist.
